Europäisches Patentamt

European Patent Office

Office européen des brevets

(11) Numéro de publication: **0 348 282**
**A1**

# (12) DEMANDE DE BREVET EUROPEEN

(21) Numéro de dépôt: **89401702.9**

(51) Int. Cl.⁴: **B 23 P 19/06**

(22) Date de dépôt: **16.06.89**

(30) Priorité: **21.06.88 FR 8808287**

(43) Date de publication de la demande:
**27.12.89 Bulletin 89/52**

(84) Etats contractants désignés:
**DE ES FR GB IT SE**

(71) Demandeur: **RENAULT AUTOMATION**
**8/10 avenue Emile Zola**
**F-92109 Boulogne-Billancourt (FR)**

(72) Inventeur: **Garnier, Marc**
**103, avenue Jean Moulin**
**F-77176 Savigny-le-Temple (FR)**

(74) Mandataire: **Saint Martin, René et al**
**Régie Nationale des Usines Renault 8 & 10, avenue Emile Zola**
**F-92109 Boulogne Billancourt (FR)**

(54) Effecteur pour la pose en continu de composants à insertion rotative.

(57) Effecteur pour la pose en continu de composants à insertion rotative, du type comportant un système d'alimentation en composants et un système de mise en place de ceux-ci. Suivant l'invention, ce système de mise en place comprend un dispositif de dépose constitué par un vérin pneumatique (4), une vis à double rampe hélicoïdale (5), un écrou à double rampe hélicoïdale (6) et une roue libre miniature (7), ainsi qu'un dispositif de localisation d'un composant à déposer, formé d'un joint torique (8) et d'une douille (9) de transmission (9).

FIG.4

EP 0 348 282 A1

**Description**

## EFFECTEUR POUR LA POSE EN CONTINU DE COMPOSANTS A INSERTION ROTATIVE

La présente invention se rapporte au domaine de l'assemblage de composants et vise plus particulièrement la pose en continu de composants à insertion rotative.

On rencontre souvent dans les opérations d'assemblage des composants dont la pose fait appel à des mouvements combinés d'introduction linéaire et de rotation sur une fraction de tour pour en obtenir le verrouillage sur le support.

On peut citer pour exemple l'ampoule électrique équipée d'une douille baïonnette, mais le principe de cet outil s'applique à tout composant habituellement mis en place à la main suivant ce mouvement naturel de pression/rotation.

L'objet de l'invention consiste en un ensemble mécanique dont la fonction est la mise en place rapide de ces composants à insertion rotative.

Suivant une particularité essentielle, cet ensemble mécanique dit effecteur, du type comportant un système d'alimentation en composants et un système de mise en place de ceux-ci, est original en ce que ce système de mise en place comprend un dispositif de dépose constitué par un vérin pneumatique, une vis à double rampe hélicoïdale, un écrou à double rampe hélicoïdale et une roue libre miniature, ainsi qu'un dispositif de localisation d'un composant à déposer, formé d'un joint torique et d'une douille de transmission.

Cet effecteur permet donc par un mouvement combiné de translation et de rotation (transformation d'un mouvement linéaire en un mouvement rotatif), de réaliser la pose automatique de composants à insertion rotative par une action extérieure unique.

D'autres particularités et avantages de l'invention ressortiront plus clairement de la description qui suit d'un mode de réalisation préféré, donné à titre d'exemple non limitatif, en référence aux dessins annexés dans lesquels :

    - Les figures 1,2 et 3 représentent respectivement trois vues schématiques d'un dispositif de dépose de composants conforme à l'invention correspondant à trois phases successives de fonctionnement,

    - et la figure 4 représente une vue en coupe longitudinale d'un tel effecteur pour une application à la pose de lampes électriques.

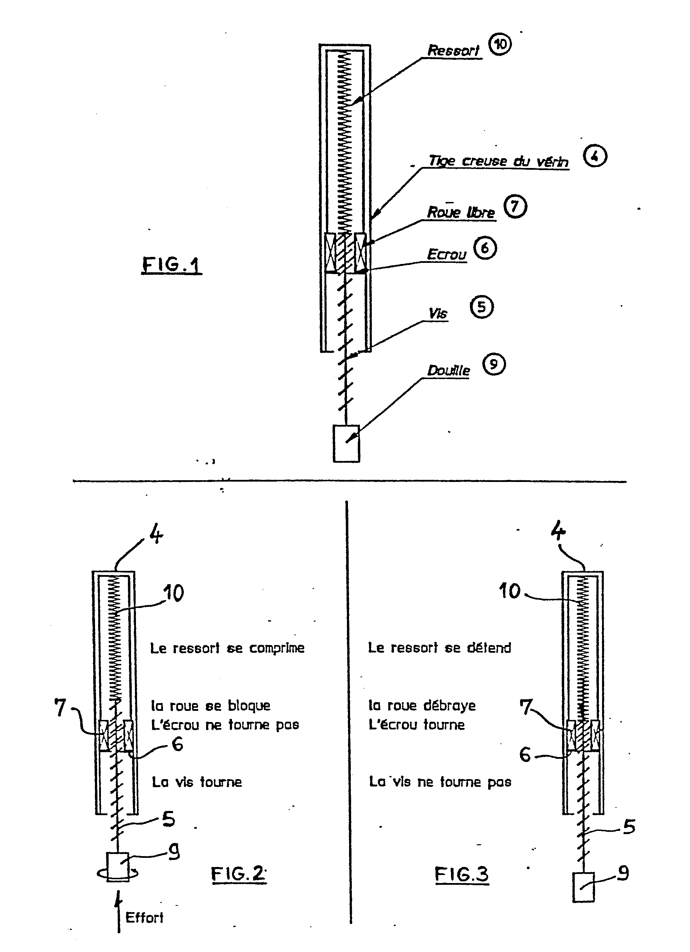

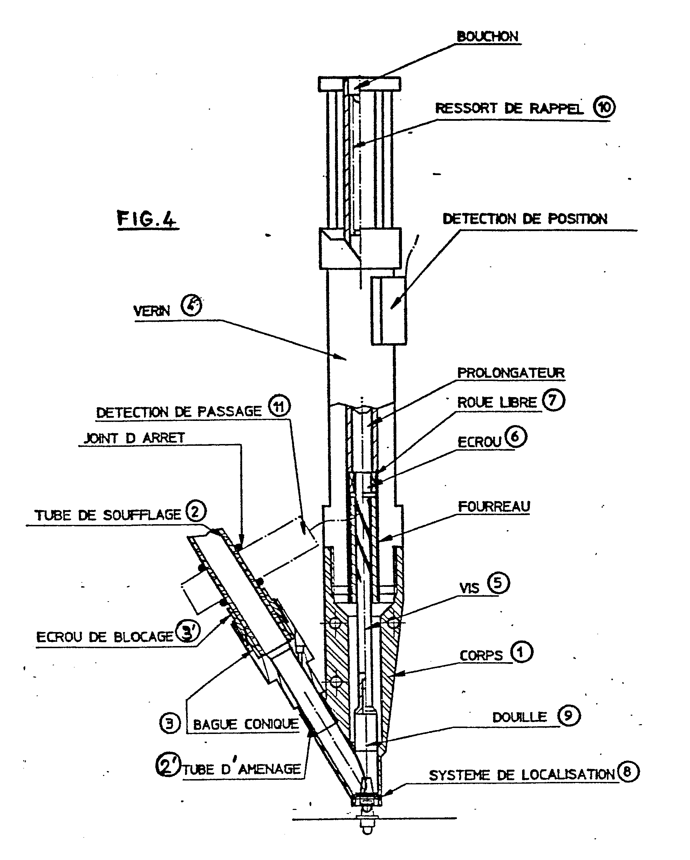

Conformément à la figure 4, cet effecteur pour la pose de lampes présente un corps 1 qui comporte lui-même les artifices de forme nécessaires à la fixation de tout l'ensemble ; il reçoit d'une part les organes permettant l'arrivée des composants, et d'autre part le système de mise en place de ces composants.

Les composants sont véhiculés à l'intérieur d'un tube 2 par soufflage. Ce tube est guidé et centré à l'aide d'une bague conique fendue 3, localisée dans un tube d'amenage 2'. Un écrou 3' vient prendre place contre cette bague et assurer ainsi le maintien du tube de soufflage.

Le système de mise en place des composants comprend :

1) un dispositif de dépose :
    La base de ce dispositif est la transformation d'un mouvement linéaire en un mouvement rotatif.

    Pour ce faire, les organes suivants entrent en jeu :
- un vérin pneumatique 4
- une vis à double rampe hélicoïdale 5 (dont le sens détermine le sens de rotation d'insertion)
- un écrou à double rampe hélicoïdale 6
- un roue libre miniature 7.

    Le vérin pneumatique 4 présente une tige creuse à l'intérieur de laquelle est logée la vis 5 à double rampe hélicoïdale qui transforme le mouvement de translation en mouvement de rotation lorsqu'un obstacle limite sa course.

    La motorisation linéaire de cet effecteur par contrôle de son action permet une limitation du couple de rotation.

    La roue libre 7 liée à l'écrou 6 interdit la rotation de l'outil en cas de besoin (pose ou dépose de composants).

    Un dispositif mécanique est également prévu pour choisir avant utilisation le sens de rotation de l'outil.

2) et un dispositif de localisation d'un composant à déposer :
    Le composant véhiculé au travers de l'orifice d'amenage, orifice débouchant dans le passage du système de dépose, vient trouver un organe de localisation souple 8 constitué par un joint torique ou équivalent, situé dans l'alésage principal de dépose. Cet organe peut donc retenir ce composant à insérer dans le nez de l'outil.

    Une douille 9, liée au système de transformation de mouvement, et située juste au dessus du composant en attente de dépose, constitue l'organe de transmission.

    L'effecteur précédemment décrit fonctionne de la manière suivante, conformément aux figures 1, 2 et 3.

    A) Lors de la translation du vérin 4, la vis à rampe hélicoïdale 5 n'a qu'un mouvement de translation axiale, tant qu'elle ne rencontre pas d'obstacle (voir figure 1).

    B) Sur un obstacle, la vis 5 se met à tourner puisque le vérin pousse la roue libre 7 qui interdit, par réaction induite, la rotation de l'écrou à rampe hélicoïdale 6 qu'elle contient, la vis se met alors à tourner. Le contact avec l'obstacle est maintenu par le ressort de rappel 10 agissant axialement sur la vis (voir figure 2). Ceci permet la mise en place correcte de la douille 9 sur le composant.

    C) Le joint 8, organe souple de maintien, permet donc à la douille de se mettre en place sur le composant. Sous un certain effort, le composant se libère du joint quitte le corps de l'effecteur et s'introduit dans son logement sur le support.

    D) A la mise en place, l'obstacle est constitué par le support même qui reçoit le composant, le même phénomène se produit, la vis tourne et entraîne avec elle le composant à insérer.

E) Le respect de la mise en butée du composant (insertion de fixation baïonnettes par exemple) se fait par limitation de la pression à l'intérieur du vérin.

Dans ce cas, le vérin n'arrive pas en bout de course puisqu'il se trouve en équilibre par réaction au travers du composant, puis de la vis sur l'écrou, de l'écrou sur la roue libre qui elle-même referme les efforts sur le vérin.

F) Au retrait de la douille, c'est-à-dire au retour du vérin, la douille reste en appui sur le composant, poussée par le ressort de rappel, mais ne tourne plus, puisque la roue libre se met en débrayage (voir figure 3).

Lorsque la butée axiale de la vis sur la roue libre est atteinte, la douille remonte alors avec la tige du vérin.

G) Un nouveau composant peut être soufflé lorsque la détection haute du verin est activée.

L'arrivée du nouveau composant est contrôlée par un détecteur de passage, 11 porté par le tube de soufflage et maintenu sur celui-ci par deux joints toriques, de part et d'autre.

## Revendications

1) Effecteur pour la pose en continu de composants à insertion rotative, du type comportant un système d'alimentation en composants et un système de mise en place de ceux-ci, caractérisé en ce que ce système de mise en place automatique comprend un dispositif de dépose constitué par un vérin pneumatique (4), une vis à double rampe hélicoïdale (5), un écrou à double rampe hélicoïdale (6) et une roue libre miniature (7), ainsi qu'un dispositif de localisation d'un composant à déposer, formé d'un joint torique (8) et d'une douille de transmission (9).

2) Effecteur suivant la revendication 1, caractérisé en ce que son système d'alimentation automatique en composants comporte un tube de soufflage (2) guidé et centré au moyen d'une bague conique fendue (3) dans un tube d'amenage (2').

## FIG.1

Ressort ⑩

Tige creuse du vérin ④

Roue libre ⑦

Ecrou ⑥

Vis ⑤

Douille ⑨

## FIG.2

4

10

Le ressort se comprime

la roue se bloque
L'écrou ne tourne pas

7

6

La vis tourne

5

9

Effort

## FIG.3

4

10

Le ressort se détend

la roue débraye
L'écrou tourne

La vis ne tourne pas

7

6

5

9

EP 0 348 282 A1

BOUCHON

RESSORT DE RAPPEL ⑩

FIG.4

DETECTION DE POSITION

VERIN ④

PROLONGATEUR

ROUE LIBRE ⑦

DETECTION DE PASSAGE ⑪

ECROU ⑥

JOINT D ARRET

FOURREAU

TUBE DE SOUFFLAGE ②

ECROU DE BLOCAGE ③'

VIS ⑤

CORPS ①

③ BAGUE CONIQUE

DOUILLE ⑨

②' TUBE D'AMENAGE

SYSTEME DE LOCALISATION ⑧

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | CH-A- 414 496 (CLEMENT) <br> * En entier * <br> --- | 1 | B 23 P 19/06 |
| Y | JP-A-57 001 632 (HINO) <br> * Figure 6 * | 1 | |
| A | | 2 | |
| | --- | | |
| A | EP-A-0 118 656 (VIEGENER) <br> --- | 2 | |
| A | ZEITSCHRIFT FÜR WIRTSCHAFTLICHE FERTIGUNG UND AUTOMATISIERUNG, vol. 81, no. 1, janvier 1986, pages 19-22, Carl Hanser Verlag, Munich, DE; R.U. FÜRTH: "Einsatz von Industrierobotern zur Montage von PKW-Heckleuchten" <br> * Page 21, colonne de gauche, lignes 39-47 * <br> ----- | | |

**DOMAINES TECHNIQUES RECHERCHES (Int. Cl.4)**

B 23 P
B 25 B
H 01 K
H 01 J
H 01 R
F 16 L

Le présent rapport a été établi pour toutes les revendications

| Lieu de la recherche | Date d'achèvement de la recherche | Examinateur |
|---|---|---|
| LA HAYE | 30-08-1989 | RIS M. |

EPO FORM 1503 03.82 (P0402)